# EUROPÄISCHE PATENTANMELDUNG

(11) **EP 3 061 332 A1**
(43) Veröffentlichungstag der Anmeldung: **31.08.2016**
(21) Anmeldenummer: 16401012.6
(22) Anmeldetag: 19.02.2016
(51) Int. Cl.: A01B 51/02, B60K 17/04, B62D 49/06

(54) **PORTALRADANTRIEBSEINHEIT FÜR EIN HÖHENVERSTELLBARES LANDWIRTSCHAFTLICHES FAHRZEUG**

(30) Priorität: 27.02.2015 DE 102015102824
(71) Anmelder: Amazonen-Werke H. Dreyer GmbH & Co. KG, 49205 Hasbergen (DE)
(72) Erfinder: Ehlen, Volker, 49205 Hasbergen (DE); Voth, Robert, 49163 Bohmte (DE); Hausmann, Carsten, 32657 Lemgo (DE)

(57) **Zusammenfassung**

Portalradantriebseinheit (4) für ein landwirtschaftliches Fahrzeug mit Portalachse und einem Rahmen (1), wobei die Portalradantriebseinheit (4) eine mit einem Laufrad (9) verbundene Ausgangswelle (17) eines Übersetzungsgetriebes (18) und eine mit einer Antriebswelle (19) einer Antriebseinrichtung (20) verbundene Eingangswelle (21) des Übersetzungsgetriebes (18) aufweist, wobei das Übersetzungsgetriebe (18) in einem Getriebegehäuse (22) der Portalradantriebseinheit (4) angeordnet ist, wobei die Portalradantriebseinheit (4) über zumindest einen Tragschenkel mit dem Rahmen (1) verbunden ist, wobei die Ausgangswelle (17) der Portalradantriebseinheit (4) mit dem zugeordneten Laufrad (9) gegenüber dem Rahmen (1) mit einer Verstelleinrichtung in vertikaler Richtung verstellbar ist. Um bei einem höhenverstellbaren landwirtschaftlichen Fahrzeug einen möglichst großen Freiraum in jeder Höheneinstellung des Fahrzeuges zwischen den Laufrädern sowie eine vorteilhafte Anordnung der Antriebseinrichtung zu schaffen, ist vorgesehen, dass das zwischen der Antriebswelle (19) der Antriebseinrichtung (20) und der Eingangswelle (21) des Übersetzungsgetriebes (18) ein den Abstand zwischen der Eingangswelle (21) des Übersetzungsgetriebes (18) und der Antriebswelle (19) der Antriebseinrichtung (20) überbrückendes Portalstirnrad (23) in einem Portalgetriebegehäuse (22) angeordnet ist, dass das Antriebszahnrad (24) der Antriebswelle (19) der Antriebseinrichtung (20) mit dem oberen Bereich des Portalstirnrades (23) über zumindest ein Zwischenstirnrad (24) verbunden ist, dass das mit dem Laufrad (9) über die Ausgangswelle (17) verbundene Übersetzungsgetriebe (18) der Portalradantriebseinheit (4) als ein in einem Planetengetriebegehäuse (29) angeordnetes Planetengetriebe (25) ausgebildet ist, dass das Portalstirnrad (23) auf der Achswelle (17) des Sonnenrades (26) des Planetengetriebes (25) drehfest angeordnet ist, dass das Hohlrad (27) des Planetengetriebes (25) mit der das Laufrad (9) tragenden Nabe (28) verbunden ist, dass die das Sonnenrad (26) und das Portalstirnrad (24) tragende Achswelle (17) in dem Planetengetriebegehäuse (29) in vertikaler Richtung verstellbar angeordnet ist.

## Beschreibung

Die Erfindung betrifft eine Portalradantriebseinheit für ein landwirtschaftliches Fahrzeug gemäß des Oberbegriffes des Patentanspruches 1.

Eine derartige Portalradantriebseinheit für ein landwirtschaftliches Fahrzeug ist in EP 2 058 154 A1 beschrieben. Dieses landwirtschaftliche Fahrzeug weist eine höhenverstellbare Einrichtung mit einer Portalachse auf den Laufrädern dieses Fahrzeuges ist jeweils eine Portalradantriebseinheit zugeordnet. Die Antriebseinrichtung der Portalradantriebseinheit ist auf Höhe der Radachse des Laufrades angeordnet und verringert somit den freien Durchgangsbereich zwischen den Laufrädern, der an sich durch die Portalachsanordnung geschaffen wird. Der Rahmen des landwirtschaftlichen Fahrzeuges, welches hier als Feldspritze ausgebildet ist, ist mittels des höhenverstellbaren Portalfahrwerks in der Höhe zu verstellen, umso eine Vergrößerung der Bodenfreiheit beim Einsatz in höhen aufgewachsenen Kulturen, wie zum Beispiel Mais und Sonnenblumen für das Fahrzeug zu schaffen. Somit wird eine geringere Beschädigung der höher aufgewachsenen Pflanzen erreicht. Außerdem kann am Hang für einen besseren Fahrkomfort das Fahrwerk einseitig ausgefahren werden, um die Maschine in einer waagerechten Position zu halten.

Der Erfindung liegt die Aufgabe zu Grunde, bei einem höhenverstellbaren landwirtschaftlichen Fahrzeug einen möglichst großen Freiraum in jeder Höheneinstellung des Fahrzeuges zwischen den Laufrädern sowie eine vorteilhafte Anordnung der Antriebseinrichtung zu schaffen.

Diese Aufgabe der erfindungsgemäß dadurch gelöst, dass das zwischen der Antriebswelle der Antriebseinrichtung und der Eingangswelle des Übersetzungsgetriebes ein den Abstand zwischen der Eingangswelle des Übersetzungsgetriebes und der Antriebswelle der Antriebseinrichtung überbrückendes Portalstirnrad in einem Portalgetriebegehäuse angeordnet ist, dass das Antriebszahnrad der Antriebswelle der Antriebseinrichtung mit dem oberen Bereich des Portalstirnrades über zumindest ein Zwischenstirnrad verbunden ist, dass das mit dem Laufrad über die Ausgangswelle verbundene Übersetzungsgetriebe der Portalradantriebseinheit als ein in einem Planetengetriebegehäuse angeordnetes Planetengetriebe ausgebildet ist, dass das Portalstirnrad auf der Achswelle des Sonnenrades des Planetengetriebes drehfest angeordnet ist, dass das Hohlrad des Planetengetriebes mit der das Laufrad tragenden Nabe verbunden ist, dass die das Sonnenrad und das Portalstirnrad tragende Achswelle in dem Planetengetriebegehäuse in vertikaler Richtung verstellbar angeordnet ist.

In Folge dieser Maßnahmen wird zur Veränderung der Bodenfreiheit eine höhenverstellbare Radantriebseinheit geschaffen. Hierbei besteht die Antriebseinheit aus einem festen Getriebeteil und einem transversalen verschiebbaren Getriebeteil, die sich relativ zueinander bewegen lassen. Hierbei ist der Antriebsmotor am festen Getriebeteil, welches an der Radaufhängung, die das Laufrad mit dem Rahmen verbindet, angeordnet ist. In jeder Höheneinstellung ist größtmöglicher Freiraum unter der Portalachse vorhanden. Die Antriebseinrichtung wird gegenüber dem zugeordneten Laufrad bei der Höhenverstellung mit verstellt.

Um eine ausreichend große Höhenverstellung zu erreichen und die hierbei entstehenden Abstände zwischen der Antriebseinheit und der Radachse zu überbrücken, ist vorgesehen, dass zwischen dem Antriebsrad der Antriebswelle und dem Portalstirnrad zumindest ein Zwischenstirnrad angeordnet ist.

Um in einfacher Weise die Höhenverstellbarkeit in erfindungsgemäßer Weise realisieren zu können, ist vorgesehen, dass das Portalgetriebegehäuse gegenüber dem Planetengetriebegehäuse zur Höhenverstellung des Rahmens gegenüber dem Laufrad in vertikaler Richtung verschiebbar zueinander angeordnet sind.

Um eine ausreichende Abdichtung der zueinander verstellbaren Elemente zu gewährleisten, ist vorgesehen, dass zwischen dem Portalgetriebegehäuse und dem Planetengetriebegehäuse und/oder gegen die beiden Getriebe miteinander verbinden Übertragungswelle Abdichtungselemente angeordnet sind.

Um sicherzustellen, dass durch die Antriebseinheit in jeder Höheneinstellung des Fahrzeuges die Antriebseinrichtung nicht den Freiraum zwischen den Laufrädern, der durch die Portalachse geschaffen wird, einzuschränken, ist vorgesehen, dass die Antriebseinrichtung zumindest annähernd auf Höhe des sich zumindest annähernd in horizontaler Richtung erstreckenden Bereiches des die Portalradantriebseinheit mit dem Rahmen verbindenden Tragschenkels angeordnet und mit dem Tragschenkel verbunden ist.

Die Höhenverstellung der Antriebseinrichtung wird dadurch gewährleistet, dass die Sonnenräder des Planetengetriebes in ihrem Abstand zueinander veränderbar an den ihnen zugeordneten Planetenträgern des Planetengetriebes angeordnet sind.

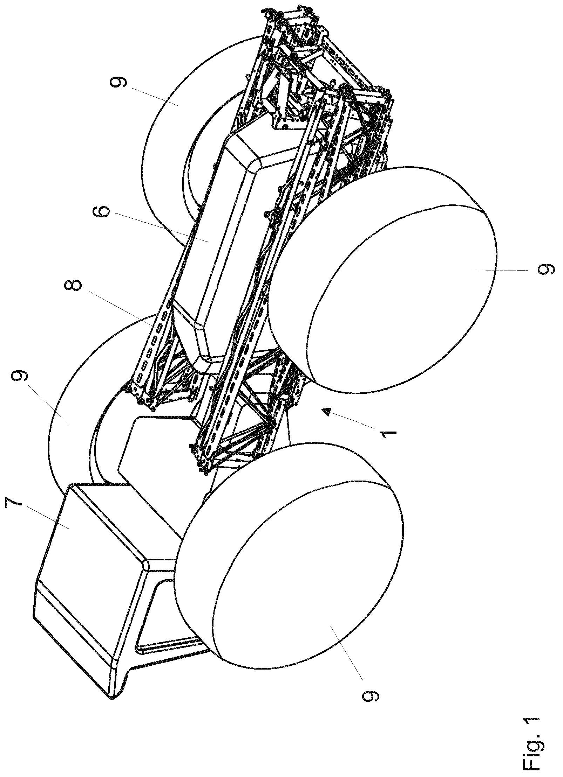

Weitere Einzelheiten der Erfindung sind der Beispielsbeschreibung und den Zeichnungen zu entnehmen. Die Zeichnungen zeigen
- Fig.1: ein landwirtschaftliches Fahrzeug in perspektivischer Darstellung und in Prinzipdarstellung,
- Fig.2: das landwirtschaftliche Fahrzeug in der Vorderansicht und eingefahrenen Fahrgestell und in Prinzipdarstellung,
- Fig.3: das landwirtschaftliche Fahrzeug in der Vorderansicht und ausgefahrenem Fahrgestell und in Prinzipdarstellung,

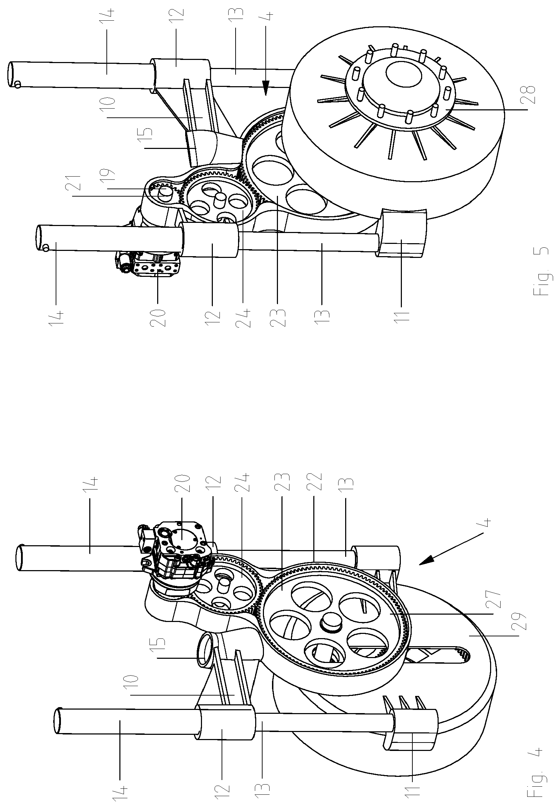

- Fig.4: die in Fahrtrichtung gesehen linke Portalradantriebseinheit des landwirtschaftlichen Fahrzeuges in perspektivischer Darstellung in der Ansicht seitlich von der Mitte und in Prinzipdarstellung in ausgefahrener Position des Fahrgestelles,
- Fig.5: die Portalradantriebseinheit gemäß Fig.4 in der Ansicht seitlich von hinten,

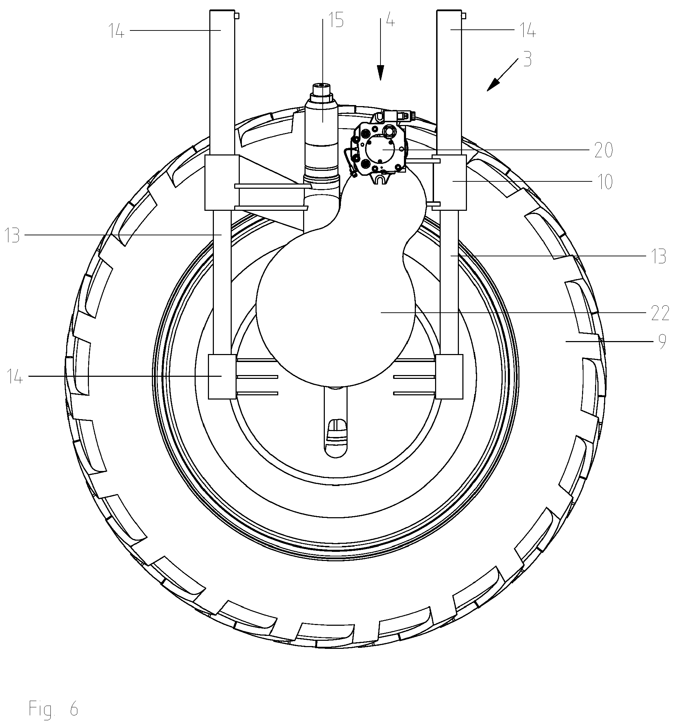

- Fig.6: die Portalradantriebseinheit gemäß Fig.4 in der Seitenansicht von seitlich innen,

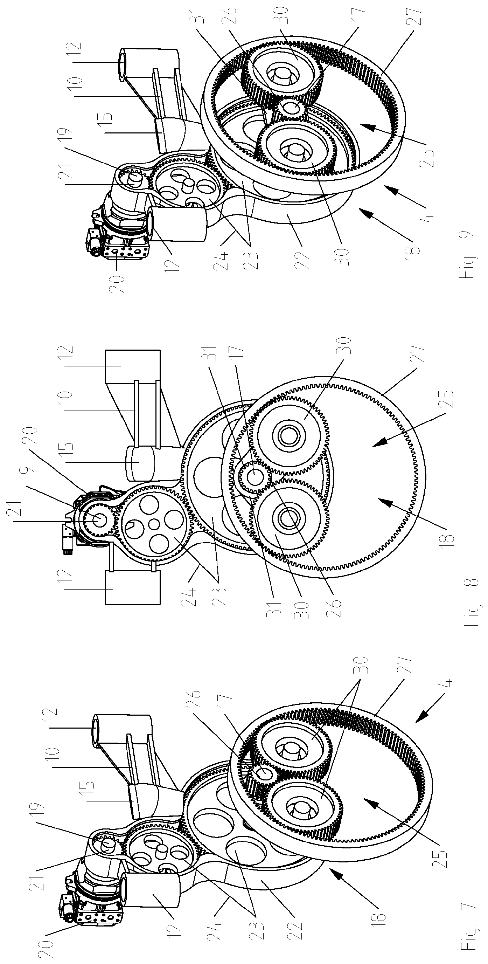

- Fig.7: die Portalradantriebseinheit in der Ansicht gemäß Fig.5 in ausgefahrener Position in perspektivischer Darstellung, wobei zum besseren Verständnis die Getriebegehäuse, zumindest deren Abdeckung zur besseren Darstellung der Getriebeelemente, nicht dargestellt sind,
- Fig.8: die Portalradantriebseinheit in der Höheneinstellung gemäß Fig.7 in Seitenansicht,
- Fig.9: die Portalradantriebseinheit gemäß der Darstellung nach Fig. 7 in mittlerer Höheneinstellung des Fahrwerkes,

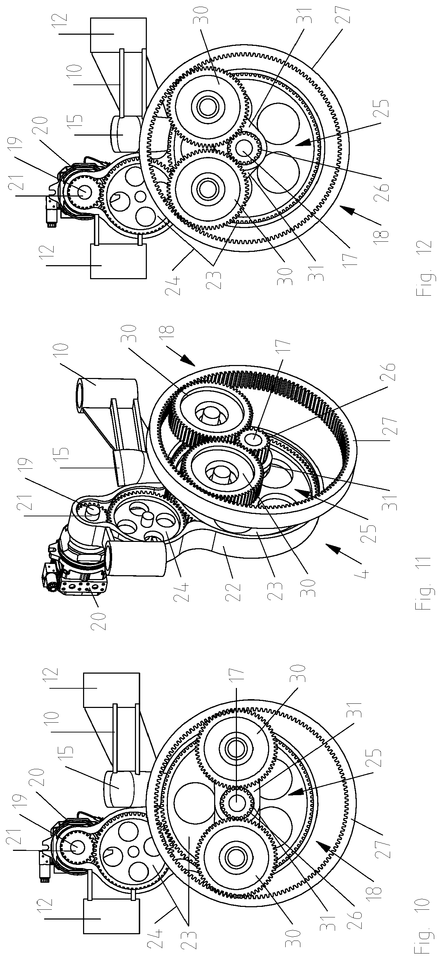

- Fig.10: die Portalradantriebseinheit in der Höheneinstellung gemäß Fig. 9 in Seitenansicht,
- Fig.11: die Portalradantriebseinheit gemäß der Darstellung nach Fig.7 in unterer Höheneinstellung des Fahrwerks,
- Fig.12: die Portalradantriebseinheit in der Höheneinstellung gemäß Fig. 11 in Seitenansicht.

Das als selbstfahrende Feldspritze ausgebildete höhenverstellbare landwirtschaftliche Fahrzeug weist einen Rahmen 1 auf, an dem ein Fahrgestell 2 mit höhenverstellbaren Radaufhängungen 3 mit Portalradantriebseinheiten 4 mit einer Portalachse 5 angeordnet sind. Auf dem Rahmen 1 sind u.a. der Vorratsbehälter 6, die Fahrerkabine 7, Dosier- und Fördereinrichtung sowie ein Verteilergestänge 8 angeordnet.

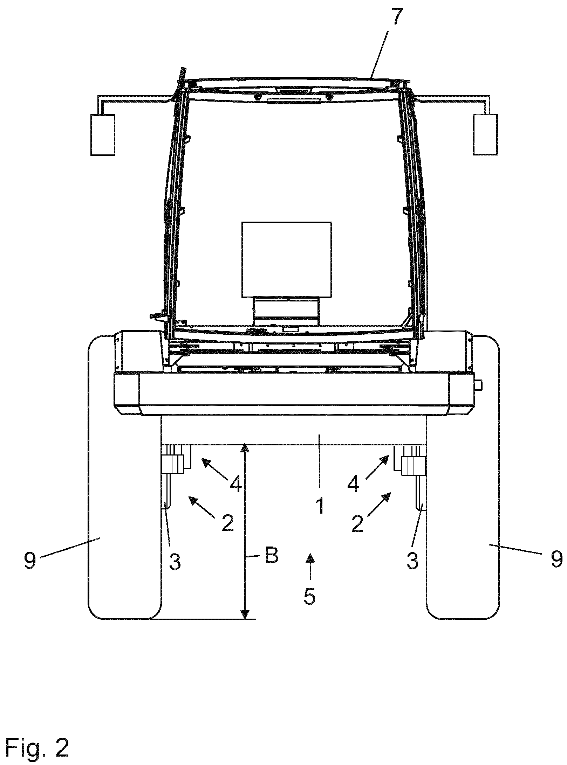

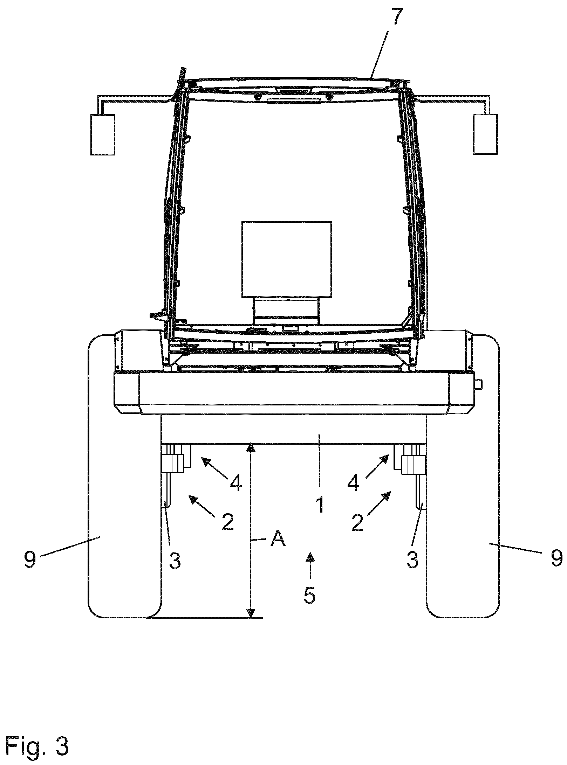

An den höhenverstellbaren Radaufhängungen 3 sind jeweils Räder 9 befestigt. Die Radaufhängungen 3 weisen jeweils ein Achsschenkeloberteil 10 und ein Achsschenkelunterteil 11 auf, die jeweils mittels Führungslager 12 über Führungsstangen 13 zueinander verschiebbar miteinander verbunden sind. Die Führungsstangen 13 sind gleichzeitig die Kolbenstangen von Hydraulikzylindern 14 zur Verstellung von des Achsschenkeloberteils 10 zu dem Achsschenkelunterteil 11, um die Höhenverstellung des Fahrgestelles 2 und des Rahmens 1 vorzunehmen. Jedes Achsschenkeloberteil 15 weist auf seiner Oberseite einen als Schwenkbolzen ausgebildeten Achsschenkelbolzen 16 auf. An jedem Achsschenkelunterteil 11 ist zumindest ein Rad 9 drehbar angeordnet. Somit ist das jeweilige Achsschenkelunterteil 11 der jeweiligen Radaufhängung 3 mit dem daran angeordneten Rad 9 gegenüber dem Rahmen 1 in aufrechter Richtung höhenverstellbar angeordnet. Somit ist der Rahmen 1 mit den daran angeordneten Bauteilen aus der unteren Position gemäß Fig.2, wobei der Rahmen 1 den Abstand A zur Bodenoberfläche aufweist, und der oberen Position gemäß Fig.3, wobei der Rahmen 1 den Abstand B zur Bodenoberfläche aufweist, verstellbar.

Die jeweilige Portalradantriebseinheit 4 weist jeweils eine mit dieser verbundene Ausgangswelle 17 eines Übersetzungsgetriebes 18 und eine mit einer Antriebswelle 19 einer im Ausführungsbeispiel als Hydraulikmotor 20 ausgebildete Antriebseinrichtung verbundene Eingangswelle 21 des Übersetzungsgetriebes 18 aufweist. Das Übersetzungsgetriebe 18 ist in einem Getriebegehäuse 22 der Portalradantriebseinheit 4 angeordnet. Der besseren Verständlichkeit sind in den Zeichnungen Teile des Getriebegehäuses 22 weggelassen werden. Die Portalradantriebseinheit 4 ist über zumindest einen Tragschenkel 22 mit dem Rahmen 1 verbunden ist. Die Ausgangswelle 23 der Portalradantriebseinheit 4 ist mit dem zugeordneten Laufrad 9 gegenüber dem Rahmen 1 mit der vorbeschriebenen Verstelleinrichtung der Radaufhängungen 3 in vertikaler Richtung verstellbar.

Zwischen der Antriebswelle 19 der Antriebseinrichtung 20 und der Eingangswelle 21 des Übersetzungsgetriebes 18 ist ein den Abstand zwischen der Eingangswelle 21 des Übersetzungsgetriebes 18 und der Antriebswelle 19 der Antriebseinrichtung 20 zumindest ein überbrückendes Portalstirnrad 23 in einem Portalgetriebegehäuse 22 angeordnet. Das Antriebszahnrad 24 der Antriebswelle 19 der Antriebseinrichtung 20 ist mit dem oberen Bereich des Portalstirnrades 23 über zumindest ein Zwischenstirnrad 24 verbunden. Das mit dem Laufrad 9 über die Ausgangswelle 17 verbundene Übersetzungsgetriebe 18 der Portalradantriebseinheit 4 ist als ein in einem Planetengetriebegehäuse 29 angeordnetes Planetengetriebe 25 ausgebildet ist. Das Portalstirnrad 23 ist auf der Achswelle 17 des Sonnenrades 26 des Planetengetriebes 25 drehfest angeordnet. Das Hohlrad 27 des Planetengetriebes 25 ist mit der das Laufrad 9 tragenden Nabe 28 verbunden. Die das Sonnenrad 26 und das Portalstirnrad 24 tragende Achswelle 17 ist in dem Planetengetriebegehäuse 29 in vertikaler Richtung verstellbar angeordnet. Zwischen dem Antriebsrad der Antriebswelle 19 und dem Portalstirnrad 23 ist zumindest ein Zwischenstirnrad 24 angeordnet.

Das Portalgetriebegehäuse 22 ist gegenüber dem Planetengetriebegehäuse 29 zur Höhenverstellung des Rahmens 1 gegenüber dem Laufrad 9 in vertikaler Richtung verschiebbar zueinander angeordnet. Zwischen dem Portalgetriebegehäuse 22 und dem Planetengetriebegehäuse 29 und/oder gegen die beiden Getriebe miteinander verbindende Übertragungswelle sind nicht dargestellte Abdichtungselemente angeordnet. Die Antriebseinrichtung 20ist zumindest annähernd auf Höhe des sich zumindest annähernd in horizontaler Richtung erstreckenden Bereiches des die Portalradantriebseinheit 4 mit dem Rahmen 1 verbindenden Tragschenkels angeordnet und mit dem Tragschenkel verbunden. Die Sonnenräder 30 des Planetengetriebes 25 sind in ihrem Abstand zueinander veränderbar an den ihnen zugeordneten Planetenträgern 31 des Planetengetriebes 25 angeordnet.

Der Aufbau der Portalradantriebseinheit 4 lässt sich wie folgt kurz zusammenfassen:

Die Portalradantriebseinheit 4 besteht aus dem festen Getriebeteil, welches in dem Getriebegehäuse 22 angeordnet ist, und dem transversal verschiebbaren Getriebeteil, welches in dem Getriebegehäuse 24 angeordnet ist. Die Getriebegehäuse 22 und 24 sind relativ zueinander zu bewegen. Der in dem Getriebegehäuse 22 angeordnete feste Getriebeteil ist ein Stirnradgetriebe, der in dem Getriebegehäuse 24 angeordnete Getriebeteil ist ein Planetengetriebe 22 mit zwei Planetenrädern 30. Das Sonnenrad 26 des Planetengetriebes 22 ist mit der Abtriebswelle 17 des Stirnradgetriebes 23 und 24 verbunden und somit feststehend. Die beiden Träger 31 der Planetenräder 30 sind drehbar auf der Abtriebswelle 17 gelagert. Das Hohlrad 27 stellt die Verbindung zum Rad 9 über die Nabe 28 her. Die Planetenträger 30 werden durch Zapfen auf einer Kreisbahn im Gehäuse geführt. Beim verstellen des Hohlrades 27 führen die Planetenräder 30 Schwenkbewegung aus, so dass der Zahneingriff in jeder Position des Hohlrades 27 bestehen bleibt. Das Rad 29 unter der Antriebsmotor 20 werden so entkoppelt und können gegeneinander verstellt werden.

## Patentansprüche

1. Portalradantriebseinheit (4) für ein landwirtschaftliches Fahrzeug mit Portalachse und einem Rahmen (1), wobei die Portalradantriebseinheit (4) eine mit einem Laufrad (9) verbundene Ausgangswelle (17) eines Übersetzungsgetriebes (18) und eine mit einer Antriebswelle (19) einer Antriebseinrichtung (20) verbundene Eingangswelle (21) des Übersetzungsgetriebes (18) aufweist, wobei das Übersetzungsgetriebe (18) in einem Getriebegehäuse (22) der Portalradantriebseinheit (4) angeordnet ist, wobei die Portalradantriebseinheit (4) über zumindest einen Tragschenkel mit dem Rahmen (1) verbunden ist, wobei die Ausgangswelle (17) der Portalradantriebseinheit (4) mit dem zugeordneten Laufrad (9) gegenüber dem Rahmen (1) mit einer Verstelleinrichtung in vertikaler Richtung verstellbar ist, **dadurch gekennzeichnet, dass** das zwischen der Antriebswelle (19) der Antriebseinrichtung (20) und der Eingangswelle (21) des Übersetzungsgetriebes (18) ein den Abstand zwischen der Eingangswelle (21) des Übersetzungsgetriebes (18) und der Antriebswelle (19) der Antriebseinrichtung (20) überbrückendes Portalstirnrad (23) in einem Portalgetriebegehäuse (22) angeordnet ist, dass das Antriebszahnrad (24) der Antriebswelle (19) der Antriebseinrichtung (20) mit dem oberen Bereich des Portalstirnrades (23) über zumindest ein Zwischenstirnrad (24) verbunden ist, dass das mit dem Laufrad (9) über die Ausgangswelle (17) verbundene Übersetzungsgetriebe (18) der Portalradantriebseinheit (4) als ein in einem Planetengetriebegehäuse (29) angeordnetes Planetengetriebe (25) ausgebildet ist, dass das Portalstirnrad (23) auf der Achswelle (17) des Sonnenrades (26) des Planetengetriebes (25) drehfest angeordnet ist, dass das Hohlrad (27) des Planetengetriebes (25) mit der das Laufrad (9) tragenden Nabe (28) verbunden ist, dass die das Sonnenrad (26) und das Portalstirnrad (24) tragende Achswelle (17) in dem Planetengetriebegehäuse (29) in vertikaler Richtung verstellbar angeordnet ist.

2. Portalradantriebseinheit nach Anspruch 1, **dadurch gekennzeichnet, dass** zwischen dem Antriebsrad der Antriebswelle (19) und dem Portalstirnrad (23) zumindest ein Zwischenstirnrad (24) angeordnet ist.

3. Portalradantriebseinheit nach zumindest einem der vorstehenden Ansprüche, **dadurch gekennzeichnet, dass** das Portalgetriebegehäuse (22) gegenüber dem Planetengetriebegehäuse (29) zur Höhenverstellung des Rahmens (1) gegenüber dem Laufrad (9) in vertikaler Richtung verschiebbar zueinander angeordnet sind.

4. Portalradantriebseinheit nach Anspruch 3, **dadurch gekennzeichnet, dass** zwischen dem Portalgetriebegehäuse (22) und dem Planetengetriebegehäuse (29) und/oder gegen die beiden Getriebe (22, 29) miteinander verbindende Übertragungswelle Abdichtungselemente angeordnet sind.

5. Portalradantriebseinheit nach zumindest einem der vorstehenden Ansprüche, **dadurch gekennzeichnet, dass** die Antriebseinrichtung (20) zumindest annähernd auf Höhe des sich zumindest annähernd in horizontaler Richtung erstreckenden Bereiches des die Portalradantriebseinheit (4) mit dem Rahmen (1) verbindenden Tragschenkels angeordnet und mit dem Tragschenkel verbunden ist.

6. Portalradantriebseinheit nach zumindest einem der vorstehenden Ansprüche, **dadurch gekennzeichnet, dass** die Sonnenräder (30) des Planetengetriebes (25) in ihrem Abstand zueinander veränderbar an den ihnen zugeordneten Planetenträgern (31) des Planetengetriebes (25) angeordnet sind.
